# EUROPEAN PATENT SPECIFICATION

(11) **EP 4 049 826 B1**
(45) Date of publication and mention of the grant of the patent: **11.12.2024**
(21) Application number: 22158124.2
(22) Date of filing: 23.02.2022
(51) Int. Cl.: B29C 45/76, B29C 45/78

(54) **INJECTION MOLDING MACHINE**
SPRITZGIESSMASCHINE
MACHINE DE MOULAGE À INJECTION

(30) Priority: 26.02.2021 JP 2021030100
(43) Date of publication of application: 31.08.2022
(73) Proprietor: SUMITOMO HEAVY INDUSTRIES, LTD., Tokyo 141-6025 (JP)
(72) Inventor: KAWAGUCHI, Tatsuya, 731-1, Naganumahara-cho, Inage-ku, Chiba-shi, Chiba, 263-0001, (JP); MARUMOTO, Hirotsugu, 731-1, Naganumahara-cho, Inage-ku, Chiba-shi, Chiba, 263-0001, (JP); TSUNEISHI, Kengo, 731-1, Naganumahara-cho, Inage-ku, Chiba-shi, Chiba, 263-0001, (JP)
(74) Representative: Louis Pöhlau Lohrentz

(56) References cited:
- EP-A1- 3 381 644
- JP-A- 2009 119 654
- JP-A- H08 170 104

## Description

### BACKGROUND OF THE INVENTION

### Field of the Invention

The present invention relates to an injection molding machine.

### Description of Related Art

An injection molding machine includes a cylinder to which a resin pellet serving as a molding material is supplied, and a heater that heats the cylinder to melt the resin pellet. The injection molding machine manufactures a molding product by melting the resin pellet inside the cylinder and filling a cavity space inside a mold unit with a molten resin.

Then, various proposals have been made for heater control to melt the resin pellet in the injection molding machine. For example, according to a technique disclosed in Japanese Unexamined Patent Publication No. 2009-119654, the technique has proposed the followings. A set temperature of a lower portion of a hopper in a headstock having the hopper installed to supply the resin pellet is automatically set depending on a set temperature of the cylinder heated by a band heater closest to the headstock. European Patent Publication No. 3381644 discloses a screw for an injection molding machine including a plurality of main flights and a plurality of sub-flights and capable of improving melting ability and decreasing a resin temperature of a transported molding material.

### SUMMARY OF THE INVENTION

Japanese Unexamined Patent Publication No. 2009-119654 discloses a technique for automatically setting the set temperature of the lower portion of the hopper, and does not disclose a technique for setting a temperature of the heater in view of a molten state of the molding material. The molding material supplied to the cylinder is heated from the vicinity of a resin feed port. In this manner, it is possible to shorten a plasticizing time until the molding material is accumulated in a completely molten state in a tip portion of the cylinder. On the other hand, when the molding material is excessively heated, the molding material melts near a root of the cylinder, and the molding material adheres to a screw. For this reason, the molding material is not advanced to the tip portion of the cylinder. As a result, the plasticizing time may be extended in some cases.

One aspect of the present invention is to provide a technique for shortening the plasticizing time and improving productivity by performing heating control on the molding material at a proper temperature.

According to one aspect of the present invention, there is provided an injection molding machine including an injection unit and a control device. The injection unit fills a mold unit with a molding material plasticized inside a cylinder. The control device controls the injection unit. The control device includes an initial set temperature setting unit, a plasticizing processing unit, a plasticizing time measurement unit, and a set temperature determining unit. The initial set temperature setting unit sets a plurality of initial set temperatures used to determine a set temperature for the cylinder by raising the initial set temperature from an initial value of the initial set temperature, the initial value of the initial set temperature being determined depending on a usage mode and the molding material or being input by a user. The plasticizing processing unit rotationally drives a screw such that a plasticizing process of the molding material is performed, at each of the different initial set temperatures. The plasticizing time measurement unit measures a plasticizing time during the plasticizing process performed by the plasticizing processing unit for each of the initial set temperatures. The set temperature determining unit determines the set temperature for the cylinder, based on a plurality of the plasticizing times measured for each of the initial set temperatures by the plasticizing time measurement unit.

According to one aspect of the present invention, a plasticizing time is shortened, and productivity is improved by performing heating control on a molding material at a proper temperature.

### BRIEF DESCRIPTION OF THE DRAWINGS

FIG. 1 is a view illustrating a state when mold opening is completed in an injection molding machine according to a first embodiment.
FIG. 2 is a view illustrating a state when mold clamping is performed in the injection molding machine according to the first embodiment.
FIG. 3 is a view illustrating a main part of the injection molding machine according to the first embodiment.
FIG. 4 is a functional block diagram illustrating components of a control device according to a second embodiment.
FIG. 5 is a view illustrating a correspondence between a plasticizing time and an initial set temperature.
FIG. 6 is a flowchart illustrating a process of setting a set temperature and starting control in a first zone in an injection molding machine according to a second embodiment.
FIG. 7 is a functional block diagram illustrating components of a control device according to the second embodiment.
FIG. 8 is a flowchart illustrating a process of setting a set temperature in a first zone and adjusting a rotation speed in the injection molding machine according to the second
embodiment.

### DETAILED DESCRIPTION OF THE INVENTION

Hereinafter, embodiments of the present invention will be described with reference to the drawings. In each drawing, the same or corresponding reference numerals will be assigned to the same or corresponding configurations, and description thereof will be omitted.

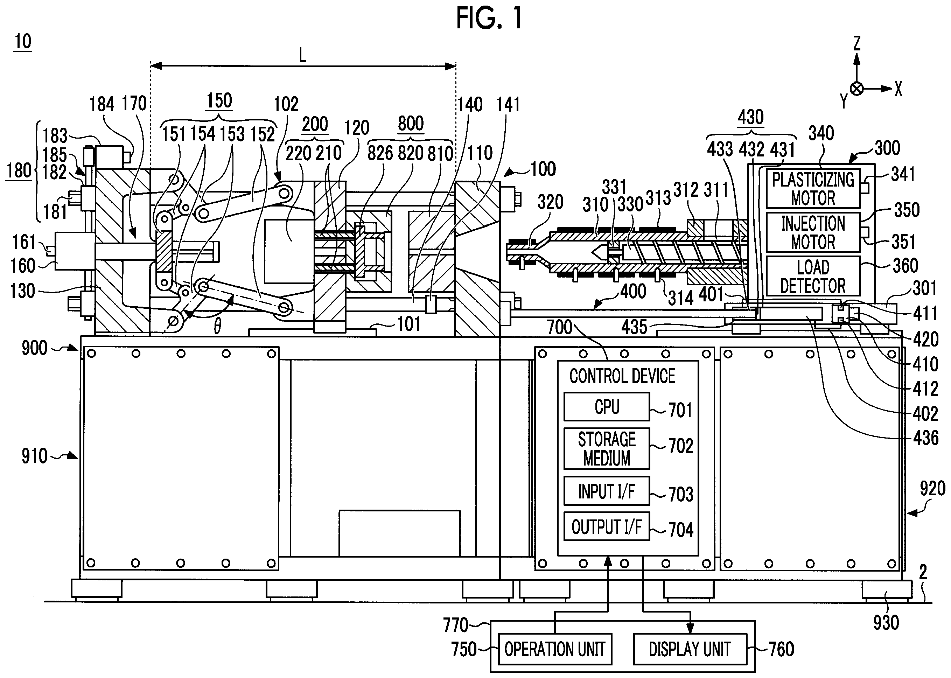

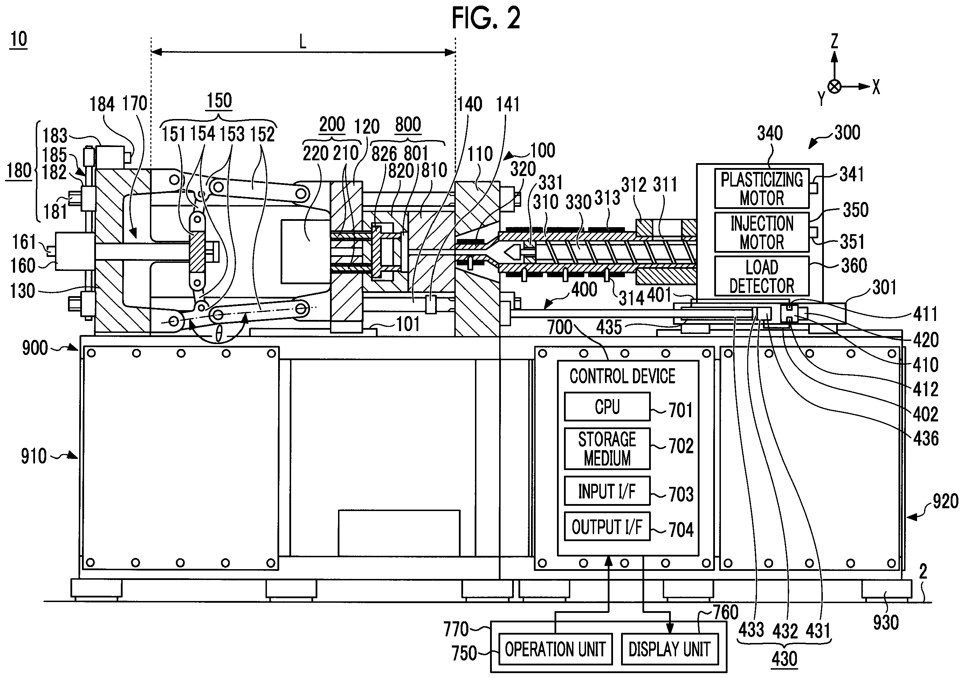

FIG. 1 is a view illustrating a state when mold opening is completed in an injection molding machine according to a first embodiment. FIG. 2 is a view illustrating a state when mold clamping is performed in the injection molding machine according to the first embodiment. In the present specification, an X-axial direction, a Y-axial direction, and a Z-axial direction are perpendicular to each other. The X-axial direction and the Y-axial direction represent a horizontal direction, and the Z-axial direction represents a vertical direction. When a mold clamping unit 100 is a horizontal type, the X-axial direction represents a mold opening and closing direction, and the Y-axial direction represents a width direction of the injection molding machine 10. A negative side in the Y-axial direction will be referred to as an operation side, and a positive side in the Y-axial direction will be referred to as an anti-operation side.

As illustrated in FIGS. 1 and 2, the injection molding machine 10 includes a mold clamping unit 100 that opens and closes a mold unit 800, an ejector unit 200 that ejects a molding product molded by the mold unit 800, an injection unit 300 that injects a molding material into the mold unit 800, a moving unit 400 that advances and retreats the injection unit 300 with respect to the mold unit 800, a control device 700 that controls each component of the injection molding machine 10, and a frame 900 that supports each component of the injection molding machine 10. The frame 900 includes a mold clamping unit frame 910 that supports the mold clamping unit 100, and an injection unit frame 920 that supports the injection unit 300. The mold clamping unit frame 910 and the injection unit frame 920 are respectively installed on a floor 2 via a leveling adjuster 930. The control device 700 is disposed in an internal space of the injection unit frame 920. Hereinafter, each component of the injection molding machine 10 will be described.

### Mold Clamping Unit

In describing the mold clamping unit 100, a moving direction of a movable platen 120 during mold closing (for example, a positive direction of an X-axis) will be defined as forward, and a moving direction of the movable platen 120 during mold opening (for example, a negative direction of the X-axis) will be defined as rearward.

The mold clamping unit 100 performs mold closing, pressurizing, mold clamping, depressurizing, and mold opening of the mold unit 800. The mold unit 800 includes a stationary die 810 and a movable die 820.

For example, the mold clamping unit 100 is a horizontal type, and the mold opening and closing direction is a horizontal direction. The mold clamping unit 100 includes a stationary platen 110 to which the stationary die 810 is attached, a movable platen 120 to which the movable die 820 is attached, and a moving mechanism 102 that moves the movable platen 120 in the mold opening and closing direction with respect to the stationary platen 110.

The stationary platen 110 is fixed to the mold clamping unit frame 910. The stationary die 810 is attached to a surface facing the movable platen 120 in the stationary platen 110.

The movable platen 120 is disposed to be movable in the mold opening and closing direction with respect to the mold clamping unit frame 910. A guide 101 that guides the movable platen 120 is laid on the mold clamping unit frame 910. The movable die 820 is attached to a surface facing the stationary platen 110 in the movable platen 120.

The movable platen 120 is advanced and retreated with respect to the stationary platen 110. In this manner, the moving mechanism 102 performs mold closing, pressurizing, mold clamping, depressurizing, and mold opening of the mold unit 800. The moving mechanism 102 includes a toggle support 130 disposed at an interval from the stationary platen 110, a tie bar 140 that connects the stationary platen 110 and the toggle support 130 to each other, a toggle mechanism 150 that moves the movable platen 120 in the mold opening and closing direction with respect to the toggle support 130, a mold clamping motor 160 that operates the toggle mechanism 150, a motion conversion mechanism 170 that converts a rotary motion into a linear motion of the mold clamping motor 160, and a mold space adjustment mechanism 180 that adjusts an interval between the stationary platen 110 and the toggle support 130.

The toggle support 130 is disposed at an interval from the stationary platen 110, and is mounted on the mold clamping unit frame 910 to be movable in the mold opening and closing direction. The toggle support 130 may be disposed to be movable along a guide laid on the mold clamping unit frame 910. The guide of the toggle support 130 may be common to the guide 101 of the movable platen 120.

In the present embodiment, the stationary platen 110 is fixed to the mold clamping unit frame 910, and the toggle support 130 is disposed to be movable in the mold opening and closing direction with respect to the mold clamping unit frame 910. However, the toggle support 130 may be fixed to the mold clamping unit frame 910, and the stationary platen 110 may be disposed to be movable in the mold opening and closing direction with respect to the mold clamping unit frame 910.

The tie bar 140 connects the stationary platen 110 and the toggle support 130 to each other at an interval L in the mold opening and closing direction. A plurality of (for example, four) tie bars 140 may be used. The plurality of tie bars 140 are disposed parallel to each other in the mold opening and closing direction, and extend in accordance with a mold clamping force. At least one of the tie bars 140 may be provided with a tie bar strain detector 141 that detects a strain of the tie bar 140. The tie bar strain detector 141 transmits a signal indicating a detection result thereof to the control device 700. The detection result of the tie bar strain detector 141 is used in detecting the mold clamping force.

In the present embodiment, as a mold clamping force detector for detecting the mold clamping force, the tie bar strain detector 141 is used. However, the present invention is not limited thereto. The mold clamping force detector is not limited to a strain gauge type. The mold clamping force detector may be a piezoelectric type, a capacitive type, a hydraulic type, or an electromagnetic type, and an attachment position thereof is not limited to the tie bar 140.

The toggle mechanism 150 is disposed between the movable platen 120 and the toggle support 130, and moves the movable platen 120 in the mold opening and closing direction with respect to the toggle support 130. The toggle mechanism 150 has a crosshead 151 that moves in the mold opening and closing direction, and a pair of link groups bent and stretched by a movement of the crosshead 151. Each of the pair of link groups has a first link 152 and a second link 153 which are connected to be freely bent and stretched by a pin. The first link 152 is oscillatingly attached to the movable platen 120 by a pin. The second link 153 is oscillatingly attached to the toggle support 130 by a pin. The second link 153 is attached to the crosshead 151 via a third link 154. When the crosshead 151 is advanced and retreated with respect to the toggle support 130, the first link 152 and the second link 153 are bent and stretched, and the movable platen 120 is advanced and retreated with respect to the toggle support 130.

A configuration of the toggle mechanism 150 is not limited to configurations illustrated in FIGS. 1 and 2. For example, in FIGS. 1 and 2, the number of nodes in each link group is five, but may be four. One end portion of the third link 154 may be connected to the node between the first link 152 and the second link 153.

The mold clamping motor 160 is attached to the toggle support 130, and operates the toggle mechanism 150. The mold clamping motor 160 advances and retreats the crosshead 151 with respect to the toggle support 130. In this manner, the first link 152 and second link 153 are bent and stretched so that the movable platen 120 is advanced and retreated with respect to the toggle support 130. The mold clamping motor 160 is directly connected to the motion conversion mechanism 170, but may be connected to the motion conversion mechanism 170 via a belt or a pulley.

The motion conversion mechanism 170 converts a rotary motion of the mold clamping motor 160 into a linear motion of the crosshead 151. The motion conversion mechanism 170 includes a screw shaft and a screw nut screwed to the screw shaft. A ball or a roller may be interposed between the screw shaft and the screw nut.

The mold clamping unit 100 performs a mold closing process, a pressurizing process, a mold clamping process, a depressurizing process, and a mold opening process under the control of the control device 700.

In the mold closing process, the mold clamping motor 160 is driven to advance the movable platen 120 by advancing the crosshead 151 to a mold closing completion position at a set movement speed. In this manner, the movable die 820 is caused to touch the stationary die 810. For example, a position or a movement speed of the crosshead 151 is detected by using a mold clamping motor encoder 161. The mold clamping motor encoder 161 detects rotation of the mold clamping motor 160, and transmits a signal indicating a detection result thereof to the control device 700.

A crosshead position detector for detecting a position of the crosshead 151 and a crosshead movement speed measurer for measuring a movement speed of the crosshead 151 are not limited to the mold clamping motor encoder 161, and a general detector can be used. In addition, a movable platen position detector for detecting a position of the movable platen 120 and a movable platen movement speed measurer for measuring a movement speed of the movable platen 120 are not limited to the mold clamping motor encoder 161, and a general detector can be used.

In the pressurizing process, the mold clamping motor 160 is further driven to further advance the crosshead 151 from the mold closing completion position to a mold clamping position, thereby generating a mold clamping force.

In the mold clamping process, the mold clamping motor 160 is driven to maintain a position of the crosshead 151 at the mold clamping position. In the mold clamping process, the mold clamping force generated in the pressurizing process is maintained. In the mold clamping process, a cavity space 801 (refer to FIG. 2) is formed between the movable die 820 and the stationary die 810, and the injection unit 300 fills the cavity space 801 with a liquid molding material. A molding product is obtained by solidifying the molding material filled therein.

The number of the cavity spaces 801 may be one or more. In the latter case, a plurality of the molding products can be obtained at the same time. An insert material may be disposed in a portion of the cavity space 801, and the other portion of the cavity space 801 may be filled with the molding material. A molding product in which the insert material and the molding material are integrated with each other can be obtained.

In the depressurizing process, the mold clamping motor 160 is driven to retreat the crosshead 151 from the mold clamping position to a mold opening start position. In this manner, the movable platen 120 is retreated to reduce the mold clamping force. The mold opening start position and the mold closing completion position may be the same position.

In the mold opening process, the mold clamping motor 160 is driven to retreat the crosshead 151 from the mold opening start position to the mold opening completion position at a set movement speed. In this manner, the movable platen 120 is retreated so that the movable die 820 is separated from the stationary die 810. Thereafter, the ejector unit 200 ejects the molding product from the movable die 820.

Setting conditions in the mold closing process, the pressurizing process, and the mold clamping process are collectively set as a series of setting conditions. For example, the movement speed or positions of the crosshead 151 (including the mold closing start position, the movement speed switching position, the mold closing completion position, and the mold clamping position) and the mold clamping force in the mold closing process and the pressurizing process are collectively set as a series of setting conditions. The mold closing start position, the movement speed switching position, the mold closing completion position, and the mold clamping position are aligned in this order from a rear side toward a front side, and represent a start point and an end point of a section in which the movement speed is set. The movement speed is set for each section. The number of the movement speed switching positions may be one or more. The movement speed switching position may not be set. Only one of the mold clamping position and the mold clamping force may be set.

The setting conditions in the depressurizing process and the mold opening process are set in the same manner . For example, the movement speed or positions (the mold opening start position, the movement speed switching position, and the mold opening completion position) of the crosshead 151 in the depressurizing process and the mold opening process are collectively set as a series of setting conditions. The mold opening start position, the movement speed switching position, and the mold opening completion position are aligned in this order from the front side toward the rear side, and represent the start point and the end point of the section in which the movement speed is set. The movement speed is set for each section. The number of the movement speed switching positions may be one or more. The movement speed switching position may not be set. The mold opening start position and the mold closing completion position may be the same position. In addition, the mold opening completion position and the mold closing start position may be the same position.

Instead of the movement speed or the position of the crosshead 151, the movement speed or the positions of the movable platen 120 may be set. In addition, instead of the position (for example, the mold clamping position) of the crosshead or the position of the movable platen, the mold clamping force may be set.

Incidentally, the toggle mechanism 150 amplifies a driving force of the mold clamping motor 160, and transmits the driving force to the movable platen 120. An amplification magnification is referred to as a toggle magnification. The toggle magnification is changed according to an angle θ (hereinafter, also referred to as a "link angle θ") formed between the first link 152 and the second link 153. The link angle θ is obtained from the position of the crosshead 151. When the link angle θ is 180°, the toggle magnification is maximized.

When a mold space of the mold unit 800 is changed due to replacement of the mold unit 800 or a temperature change in the mold unit 800, mold space adjustment is performed so that a predetermined mold clamping force is obtained during the mold clamping. For example, in the mold space adjustment, the interval L between the stationary platen 110 and the toggle support 130 is adjusted so that the link angle θ of the toggle mechanism 150 becomes a predetermined angle when the movable die 820 touches the stationary die 810.

The mold clamping unit 100 has the mold space adjustment mechanism 180. The mold space adjustment mechanism 180 performs the mold space adjustment by adjusting the interval L between the stationary platen 110 and the toggle support 130. For example, a timing for the mold space adjustment is determined from an end point of a molding cycle to a start point of a subsequent molding cycle. For example, the mold space adjustment mechanism 180, has a screw shaft 181 formed in a rear end portion of the tie bar 140, a screw nut 182 held by the toggle support 130 to be rotatable and not to be advanced and retreated, and a mold space adjustment motor 183 that rotates the screw nut 182 screwed to the screw shaft 181.

The screw shaft 181 and the screw nut 182 are provided for each of the tie bars 140. A rotational driving force of the mold space adjustment motor 183 may be transmitted to a plurality of the screw nuts 182 via a rotational driving force transmitting unit 185. The plurality of screw nuts 182 can be rotated in synchronization with each other. The plurality of screw nuts 182 can be individually rotated by changing a transmission channel of the rotational driving force transmitting unit 185.

For example, the rotational driving force transmitting unit 185 is configured to include a gear. In this case, a driven gear is formed on an outer periphery of each screw nut 182, a driving gear is attached to an output shaft of the mold space adjustment motor 183, and a plurality of intermediate gears meshing with the driven gear and the driving gear are held to be rotatable in a central portion of the toggle support 130. The rotational driving force transmitting unit 185 may be configured to include a belt or a pulley instead of the gear.

An operation of the mold space adjustment mechanism 180 is controlled by the control device 700. The control device 700 drives the mold space adjustment motor 183 to rotate the screw nut 182. As a result, a position of the toggle support 130 with respect to the tie bar 140 is adjusted, and the interval L between the stationary platen 110 and the toggle support 130 is adjusted. In addition, a plurality of the mold space adjustment mechanisms may be used in combination.

The interval L is detected by using the mold space adjustment motor encoder 184. The mold space adjustment motor encoder 184 detects a rotation amount or a rotation direction of the mold space adjustment motor 183, and transmits a signal indicating a detection result thereof to the control device 700. The detection result of the mold space adjustment motor encoder 184 is used in monitoring or controlling the position or the interval L of the toggle support 130. A toggle support position detector for detecting the position of the toggle support 130 and an interval detector for detecting the interval L are not limited to the mold space adjustment motor encoder 184, and a general detector can be used.

The mold clamping unit 100 may have a mold temperature controller that adjusts the temperature of the mold unit 800. The mold unit 800 has a flow path of the temperature control medium inside the mold unit 800. The mold temperature controller adjusts the temperature of the mold unit 800 by adjusting the temperature of the temperature control medium supplied to the flow path of the mold unit 800.

The mold clamping unit 100 of the present embodiment is the horizontal type in which the mold opening and closing direction is the horizontal direction, but may be a vertical type in which the mold opening and closing direction is an upward-downward direction.

The mold clamping unit 100 of the present embodiment has the mold clamping motor 160 as a drive source. However, a hydraulic cylinder may be provided instead of the mold clamping motor 160. In addition, the mold clamping unit 100 may have a linear motor for mold opening and closing, and may have an electromagnet for mold clamping.

### Ejector Unit

In describing the ejector unit 200, similarly to the description of the mold clamping unit 100, a moving direction of the movable platen 120 during the mold closing (for example, the positive direction of the X-axis) will be defined as forward, and a moving direction of the movable platen 120 during the mold opening (for example, the negative direction of the X-axis) will be defined as rearward.

The ejector unit 200 is attached to the movable platen 120, and is advanced and retreated together with the movable platen 120. The ejector unit 200 has an ejector rod 210 that ejects a molding product from the mold unit 800, and a drive mechanism 220 that moves the ejector rod 210 in the moving direction (X-axial direction) of the movable platen 120.

The ejector rod 210 is disposed to be freely advanced and retreated in a through-hole of the movable platen 120. A front end portion of the ejector rod 210 comes into contact with an ejector plate 826 of the movable die 820. The front end portion of the ejector rod 210 may be connected to or may not be connected to the ejector plate 826.

For example, the drive mechanism 220 has an ejector motor and a motion conversion mechanism that converts a rotary motion of the ejector motor into a linear motion of the ejector rod 210. The motion conversion mechanism includes a screw shaft and a screw nut screwed to the screw shaft. A ball or a roller may be interposed between the screw shaft and the screw nut.

The ejector unit 200 performs an ejection process under the control of the control device 700. In the ejection process, the ejector rod 210 is advanced from a standby position to an ejection position at a set movement speed. In this manner, the ejector plate 826 is advanced to eject the molding product. Thereafter, the ejector motor is driven to retreat the ejector rod 210 at a set movement speed, and the ejector plate 826 is retreated to an original standby position.

For example, a position or a movement speed of the ejector rod 210 is detected by using an ejector motor encoder. The ejector motor encoder detects the rotation of the ejector motor, and transmits a signal indicating a detection result thereof to the control device 700. An ejector rod position detector for detecting the position of the ejector rod 210, and an ejector rod movement speed measurer for measuring the movement speed of the ejector rod 210 are not limited to the ejector motor encoder, and a general detector can be used.

### Injection Unit

In describing the injection unit 300, unlike the description of the mold clamping unit 100 or the description of the ejector unit 200, a moving direction of the screw 330 during filling (for example, the negative direction of the X-axis) will be defined as forward, and a moving direction of the screw 330 during plasticizing (for example, the positive direction of the X-axis) will be defined as rearward.

The injection unit 300 is installed in a slide base 301, and the slide base 301 is disposed to be freely advanced and retreated with respect to the injection unit frame 920. The injection unit 300 is disposed as to be freely advanced and retreated with respect to the mold unit 800. The injection unit 300 touches the mold unit 800, and fills the cavity space 801 inside the mold unit 800 with the molding material plasticized inside a cylinder 310. For example, the injection unit 300 has a cylinder 310 that heats the molding material, a nozzle 320 provided in a front end portion of the cylinder 310, a screw 330 disposed to be freely advanced and retreated and rotatable inside the cylinder 310, a plasticizing motor 340 that rotates the screw 330, an injection motor 350 that advances and retreats the screw 330, and a load detector 360 that measures a load transmitted between the injection motor 350 and the screw 330.

The cylinder 310 heats the molding material supplied into the cylinder 310 from a feed port 311. For example, the molding material includes a resin. For example, the molding material is formed in a pellet shape, and is supplied to the feed port 311 in a solid state. The feed port 311 is formed in a rear portion of the cylinder 310. A cooler 312 such as a water-cooling cylinder is provided on an outer periphery of the rear portion of the cylinder 310. In front of the cooler 312, a heating unit 313 such as a band heater and a temperature measurer 314 are provided on an outer periphery of the cylinder 310.

The cylinder 310 is divided into a plurality of zones in the axial direction (for example, the X-axial direction) of the cylinder 310. The heating unit 313 and the temperature measurer 314 are provided in each of the plurality of zones. The control device 700 controls the heating unit 313 so that a set temperature is set in each of the plurality of zones and a measurement temperature of the temperature measurer 314 reaches the set temperature.

The nozzle 320 is provided in a front end portion of the cylinder 310, and is pressed against the mold unit 800. The heating unit 313 and the temperature measurer 314 are provided on the outer periphery of the nozzle 320. The control device 700 controls the heating unit 313 so that a measurement temperature of the nozzle 320 reaches the set temperature.

The screw 330 is disposed to be rotatable and to be freely advanced and retreated inside the cylinder 310. When the screw 330 is rotated, the molding material is fed forward along a helical groove of the screw 330. The molding material is gradually melted by heat from the cylinder 310 while being fed forward. As the liquid molding material is fed forward of the screw 330 and is accumulated in a front portion of the cylinder 310, the screw 330 is retreated. Thereafter, when the screw 330 is advanced, the liquid molding material accumulated in front of the screw 330 is injected from the nozzle 320, and fills the inside of the mold unit 800.

As a backflow prevention valve for preventing a backflow of the molding material fed rearward from the front of the screw 330 when the screw 330 is pressed forward, a backflow prevention ring 331 is attached to the front portion of the screw 330 to be freely advanced and retreated.

The backflow prevention ring 331 is pressed rearward by the pressure of the molding material in front of the screw 330 when the screw 330 is advanced, and is relatively retreated with respect to the screw 330 to a close position (refer to FIG. 2) for closing a flow path of the molding material. In this manner, the backflow of the molding material accumulated in front of the screw 330 is prevented.

On the other hand, the backflow prevention ring 331 is pressed forward by the pressure of the molding material fed forward along the helical groove of the screw 330 when the screw 330 is rotated, and is relatively advanced with respect to the screw 330 to an open position (refer to FIG. 1) for opening the flow path of the molding material. In this manner, the molding material is fed forward of the screw 330.

The backflow prevention ring 331 may be either a co-rotation type rotating together with the screw 330 or a non-co-rotation type that does not rotate together with the screw 330.

The injection unit 300 may have a drive source that advances and retreats the backflow prevention ring 331 with respect to the screw 330 between the open position and the close position.

The plasticizing motor 340 rotates the screw 330. The drive source for rotating the screw 330 is not limited to the plasticizing motor 340, and may be a hydraulic pump, for example.

The injection motor 350 advances and retreats the screw 330. A motion conversion mechanism that converts a rotary motion of the injection motor 350 into a linear motion of the screw 330 is provided between the injection motor 350 and the screw 330. For example, the motion conversion mechanism has a screw shaft and a screw nut screwed to the screw shaft. A ball or a roller may be provided between the screw shaft and the screw nut. The drive source that advances and retreats the screw 330 is not limited to the injection motor 350, and may be a hydraulic cylinder, for example.

The load detector 360 measures a load transmitted between the injection motor 350 and the screw 330. The detected load is converted into the pressure by the control device 700. The load detector 360 is provided in a load transmission channel between the injection motor 350 and the screw 330, and measures the load acting on the load detector 360.

The load detector 360 transmits a signal of the detected load to the control device 700. The load detected by the load detector 360 is converted into the pressure acting between the screw 330 and the molding material, and is used in controlling or monitoring the pressure received from the molding material by the screw 330, a back pressure against the screw 330, or the pressure acting on the molding material from the screw 330.

The pressure detector for detecting the pressure of the molding material is not limited to the load detector 360, and a general detector can be used. For example, a nozzle pressure sensor or a mold internal pressure sensor may be used. The nozzle pressure sensor is installed in the nozzle 320. The mold internal pressure sensor is installed inside the mold unit 800.

The injection unit 300 performs a plasticizing process, a filling process, and a holding pressure process under the control of the control device 700. The filling process and the holding pressure process may be collectively referred to as an injection process.

In the plasticizing process, the plasticizing motor 340 is driven to rotate the screw 330 at a set rotation speed, and the molding material is fed forward along the helical groove of the screw 330. As a result, the molding material is gradually melted. As the liquid molding material is fed forward of the screw 330 and is accumulated in a front portion of the cylinder 310, the screw 330 is retreated. For example, a rotation speed of the screw 330 is measured by using a plasticizing motor encoder 341. The plasticizing motor encoder 341 detects the rotation of the plasticizing motor 340, and transmits a signal indicating a detection result thereof to the control device 700. A screw rotational speed measurer for measuring the rotation speed of the screw 330 is not limited to the plasticizing motor encoder 341, and a general detector can be used.

In the plasticizing process, the injection motor 350 may be driven to apply a preset back pressure to the screw 330 in order to limit sudden retreat of the screw 330. The back pressure applied to the screw 330 is measured by using the load detector 360, for example. When the screw 330 is retreated to a plasticizing completion position and a predetermined amount of the molding material is accumulated in front of the screw 330, the plasticizing process is completed.

The position and the rotation speed of the screw 330 in the plasticizing process are collectively set as a series of setting conditions. For example, a plasticizing start position, a rotation speed switching position, and a plasticizing completion position are set. The positions are aligned in this order from the front side toward the rear side, and represent the start point and the end point of the section in which the rotation speed is set. The rotation speed is set for each section. The number of the rotation speed switching positions may be one or more. The rotation speed switching position may not be set. In addition, the back pressure is set for each section.

In the filling process, the injection motor 350 is driven to advance the screw 330 at a set movement speed, and the cavity space 801 inside the mold unit 800 is filled with the liquid molding material accumulated in front of the screw 330. The position or the movement speed of the screw 330 is detected by using an injection motor encoder 351, for example. The injection motor encoder 351 detects the rotation of the injection motor 350, and transmits a signal indicating a detection result thereof to the control device 700. When the position of the screw 330 reaches a set position, the filling process is switched to the holding pressure process (so-called V/P switching). The position where the V/P switching is performed will be referred to as a V/P switching position. The set movement speed of the screw 330 may be changed in accordance with the position or a time of the screw 330.

The position and the movement speed of the screw 330 in the filling process are collectively set as a series of setting conditions. For example, a filling start position (also referred to as an "injection start position"), the movement speed switching position, and the V/P switching position are set. The positions are aligned in this order from the rear side toward the front side, and represent the start point and the end point of the section in which the movement speed is set. The movement speed is set for each section. The number of the movement speed switching positions may be one or more. The movement speed switching position may not be set.

An upper limit value of the pressure of the screw 330 is set for each section in which the movement speed of the screw 330 is set. The pressure of the screw 330 is measured by the load detector 360. When the pressure of the screw 330 is equal to or lower than a setting pressure, the screw 330 is advanced at a set movement speed. On the other hand, when the pressure of the screw 330 exceeds the setting pressure, in order to protect the mold, the screw 330 is advanced at the movement speed lower than the set movement speed so that the pressure of the screw 330 is equal to or lower than the setting pressure.

After the position of the screw 330 reaches the V/P switching position in the filling process, the screw 330 may be temporarily stopped at the V/P switching position, and thereafter, the V/P switching may be performed. Immediately before the V/P switching, instead of stopping the screw 330, the screw 330 may be advanced at a low speed, or may be retreated at a low speed. In addition, a screw position detector for detecting the position of the screw 330 and a screw movement speed measurer for measuring the movement speed of the screw 330 are not limited to the injection motor encoder 351, and a general detector can be used.

In the holding pressure process, the injection motor 350 is driven to press the screw 330 forward. A pressure (hereinafter, also referred to as a "holding pressure") of the molding material in the front end portion of the screw 330 is held at a setting pressure, and the molding material remaining inside the cylinder 310 is pressed toward the mold unit 800. The molding material which is insufficient due to cooling shrinkage inside the mold unit 800 can be replenished. The holding pressure is measured by using the load detector 360, for example. A setting value of the holding pressure may be changed depending on an elapsed time from the start of the holding pressure process. The holding pressure and a holding time for holding the holding pressure in the holding pressure process may be respectively set, or may be collectively set as a series of setting conditions.

In the holding pressure process, the molding material in the cavity space 801 inside the mold unit 800 is gradually cooled, and when the holding pressure process is completed, an inlet of the cavity space 801 is closed by the solidified molding material. This state is referred to as gate seal, and prevents the backflow of the molding material from the cavity space 801. After the holding pressure process, a cooling process starts. In the cooling process, the molding material inside the cavity space 801 is solidified. In order to shorten a molding cycle time, the plasticizing process may be performed during the cooling process.

The injection unit 300 of the present embodiment is an in-line screw type, but may be a pre-plastic type. The injection unit of the pre-plastic type supplies the molding material melted inside a plasticizing cylinder to an injection cylinder, and the molding material is injected into the mold unit from the injection cylinder. Inside the plasticizing cylinder, the screw is disposed to be rotatable and not to be advanced and retreated, or the screw is disposed to be rotatable and to be freely advanced and retreated. On the other hand, a plunger is disposed to be freely advanced and retreated inside the injection cylinder.

In addition, the injection unit 300 of the present embodiment is a horizontal type in which the axial direction of the cylinder 310 is a horizontal direction, but may be a vertical type in which the axial direction of the cylinder 310 is an upward-downward direction. The mold clamping unit combined with the injection unit 300 of the vertical type may be the vertical type or the horizontal type. Similarly, the mold clamping unit combined with the injection unit 300 of the horizontal type may be the horizontal type or the vertical type.

### Moving Unit

In describing the moving unit 400, similarly to the description of the injection unit 300, a moving direction of the screw 330 during the filling (for example, the negative direction of the X-axis) will be defined as forward, and a moving direction of the screw 330 during the plasticizing (for example, the positive direction of the X-axis) will be defined as rearward.

The moving unit 400 advances and retreats the injection unit 300 with respect to the mold unit 800. The moving unit 400 presses the nozzle 320 against the mold unit 800, thereby generating a nozzle touch pressure. The moving unit 400 includes a hydraulic pump 410, a motor 420 serving as a drive source, and a hydraulic cylinder 430 serving as a hydraulic actuator.

The hydraulic pump 410 has a first port 411 and a second port 412. The hydraulic pump 410 is a pump that can rotate in both directions, and switches rotation directions of the motor 420. In this manner, a hydraulic fluid (for example, oil) is sucked from any one of the first port 411 and the second port 412, and is discharged from the other to generate a hydraulic pressure. The hydraulic pump 410 can suck the hydraulic fluid from a tank, and can discharge the hydraulic fluid from any one of the first port 411 and the second port 412.

The motor 420 operates the hydraulic pump 410. The motor 420 drives the hydraulic pump 410 in a rotation direction and with a rotation torque in accordance with a control signal transmitted from the control device 700. The motor 420 may be an electric motor, or may be an electric servo motor.

The hydraulic cylinder 430 has a cylinder body 431, a piston 432, and a piston rod 433. The cylinder body 431 is fixed to the injection unit 300. The piston 432 partitions the inside of the cylinder body 431 into a front chamber 435 serving as a first chamber and a rear chamber 436 serving as a second chamber. The piston rod 433 is fixed to the stationary platen 110.

The front chamber 435 of the hydraulic cylinder 430 is connected to the first port 411 of the hydraulic pump 410 via a first flow path 401. The hydraulic fluid discharged from the first port 411 is supplied to the front chamber 435 via the first flow path 401. In this manner, the injection unit 300 is pressed forward. The injection unit 300 is advanced, and the nozzle 320 is pressed against the stationary die 810. The front chamber 435 functions as a pressure chamber that generates the nozzle touch pressure of the nozzle 320 by the pressure of the hydraulic fluid supplied from the hydraulic pump 410.

On the other hand, the rear chamber 436 of the hydraulic cylinder 430 is connected to the second port 412 of the hydraulic pump 410 via a second flow path 402. The hydraulic fluid discharged from the second port 412 is supplied to the rear chamber 436 of the hydraulic cylinder 430 via the second flow path 402. In this manner, the injection unit 300 is pressed rearward. The injection unit 300 is retreated, and the nozzle 320 is separated from the stationary die 810.

In the present embodiment, the moving unit 400 includes the hydraulic cylinder 430, but the present invention is not limited thereto. For example, instead of the hydraulic cylinder 430, an electric motor and a motion conversion mechanism that converts a rotary motion of the electric motor into a linear motion of the injection unit 300 may be used.

### Control Device

For example, the control device 700 is configured to include a computer, and has a central processing unit (CPU) 701, a storage medium 702 such as a memory, an input interface 703, and an output interface 704 as illustrated in FIGS. 1 and 2. The control device 700 performs various types of control by causing the CPU 701 to execute a program stored in the storage medium 702. In addition, the control device 700 receives a signal from the outside through the input interface 703, and transmits the signal to the outside through the output interface 704.

The control device 700 repeatedly performs the plasticizing process, the mold closing process, the pressurizing process, the mold clamping process, the filling process, the holding pressure process, the cooling process, the depressurizing process, the mold opening process, and the ejection process, thereby repeatedly manufacturing the molding product. A series of operations for obtaining the molding product, for example, an operation from the start of the plasticizing process to the start of the subsequent plasticizing process will be referred to as a "shot" or a "molding cycle". In addition, a time required for one shot will be referred to as a "molding cycle time" or a "cycle time".

For example, in one molding cycle, the plasticizing process, the mold closing process, the pressurizing process, the mold clamping process, the filling process, the holding pressure process, the cooling process, the depressurizing process, the mold opening process, and the ejection process are performed in this order. The order described here is the order of the start times of the respective processes. The filling process, the holding pressure process, and the cooling process are performed during the mold clamping process. The start of the mold clamping process may coincide with the start of the filling process. The completion of the depressurizing process coincides with the start of the mold opening process.

A plurality of processes may be performed at the same time in order to shorten the molding cycle time. For example, the plasticizing process may be performed during the cooling process of the previous molding cycle or may be performed during the mold clamping process. In this case, the mold closing process may be performed in an initial stage of the molding cycle. In addition, the filling process may start during the mold closing process. In addition, the ejection process may start during the mold opening process. When an on-off valve for opening and closing the flow path of the nozzle 320 is provided, the mold opening process may start during the plasticizing process. The reason is as follows. Even when the mold opening process starts during the plasticizing process, when the on-off valve closes the flow path of the nozzle 320, the molding material does not leak from the nozzle 320.

One molding cycle may include a process other than the plasticizing process, the mold closing process, the pressurizing process, the mold clamping process, the filling process, the holding pressure process, the cooling process, the depressurizing process, the mold opening process, and the ejection process.

For example, after the holding pressure process is completed and before the plasticizing process starts, a pre-plasticizing suck-back process of retreating the screw 330 to a preset plasticizing start position may be performed. The pressure of the molding material accumulated in front of the screw 330 before the plasticizing process starts can be reduced, and it is possible to prevent the screw 330 from being rapidly retreated when the plasticizing process starts.

In addition, after the plasticizing process is completed and before the filling process starts, a post-plasticizing suck-back process may be performed in which the screw 330 is retreated to a preset filling start position (also referred to as an "injection start position") . The pressure of the molding material accumulated in front of the screw 330 before the filling process starts can be reduced, and can prevent a leakage of the molding material from the nozzle 320 before the filling process starts.

The control device 700 is connected to an operation unit 750 that receives an input operation of a user, and a display unit 760 that displays a screen. For example, the operation unit 750 and the display unit 760 may be configured to include a touch panel 770, and may be integrated with each other. The touch panel 770 serving as the display unit 760 displays the screen under the control of the control device 700. For example, the screen of the touch panel 770 may display settings of the injection molding machine 10, and information on a current state of the injection molding machine 10. In addition, for example, the screen of the touch panel 770 may display a button for receiving the input operation of the user or an operation unit such as an input column. The touch panel 770 serving as the operation unit 750 detects an input operation of the user on the screen, and outputs a signal corresponding to the input operation to the control device 700. In this manner, for example, while confirming information displayed on the screen, the user can perform settings (including an input of a setting value) of the injection molding machine 10 by operating the operation unit provided on the screen. In addition, the user can operate the injection molding machine 10 corresponding to the operation unit by operating the operation unit provided on the screen. For example, the operation of the injection molding machine 10 may be the operation (including stopping) of the mold clamping unit 100, the ejector unit 200, the injection unit 300, and the moving unit 400. In addition, the operation of the injection molding machine 10 may be switching between the screens displayed on the touch panel 770 serving as the display unit 760.

A case has been described in which the operation unit 750 and the display unit 760 of the present embodiment are integrated with each other as the touch panel 770. However, both of these may be independently provided. In addition, a plurality of the operation units 750 may be provided. The operation unit 750 and the display unit 760 are disposed on the operation side (negative direction of the Y-axis) of the mold clamping unit 100 (more specifically, the stationary platen 110).

### First Embodiment

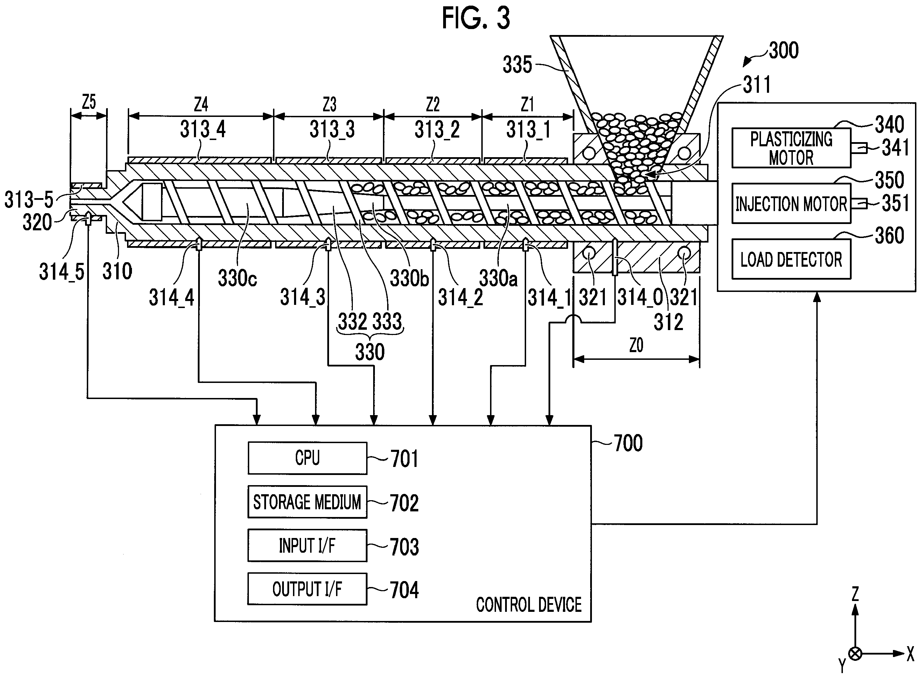

FIG. 3 is a view illustrating a main part of the injection unit 300 according to a first embodiment. As illustrated in FIG. 3, the injection unit 300 according to the first embodiment includes the cylinder 310 and the screw 330 that feeds a resin into the cylinder 310. In addition, as the heating unit 313, the injection unit 300 according to the present embodiment includes five heating units 313_1 to 313_5 divided into each zone on the outer periphery of the cylinder 310.

The screw 330 integrally includes a screw rotary shaft 332 and a flight 333 spirally provided around the screw rotary shaft 332. When the screw 330 rotates, the flight 333 of the screw 330 moves, and the resin pellet filling a screw groove of the screw 330 is fed forward.

For example, the screw 330 is distinguished as a supply zone 330a, a compression zone 330b, and a metering zone 330c from a rear side (hopper 335 side) to a front side (nozzle 320 side) along the axial direction. The supply zone 330a is a portion that receives the resin pellet and transports the resin pellet forward. The compression zone 330b is a portion that melts the supplied resin while compressing the supplied resin. The metering zone 330c is a portion that plasticizes a fixed amount of the molten resin at a time. A depth of a screw groove of the screw 330 is deep in the supply zone 330a, is shallow in the metering zone 330c, and is shallower in the compression zone 330b toward the front side. A configuration of the screw 330 is not particularly limited. For example, the depth of the screw groove of the screw 330 may be constant. In the present embodiment, a case will be described where ratios of lengths of the supply zone 330a, the compression zone 330b, and the metering zone 330c are approximately 50%, approximately 25%, and approximately 25%. However, the ratios of the lengths are examples. The ratios vary depending on a type of molding material or a usage mode.

The injection molding machine 10 injects the molten resin inside the cylinder 310 from the nozzle 320, and fills the cavity space 801 inside the mold unit 800 with the molten resin. The mold unit 800 is configured to include the stationary die and the movable die, and the cavity space 801 is formed between the stationary die and the movable die when the mold clamping is performed. The resin cooled and solidified in the cavity space 801 is unloaded as a molding product after the mold opening is performed. The resin pellet serving as the molding material is supplied from the hopper 335 to a rear portion of the cylinder 310.

A resin feed port 311 is formed at a predetermined position of the cylinder 310, and the hopper 335 is connected to a resin feed port. The resin pellet inside the hopper 335 is supplied into the cylinder 310 through the resin feed port.

The cylinder 310 is divided into six zones along a longitudinal direction leading to the nozzle 320. In the present embodiment, in the six zones, the heating units 313 (heaters) are provided in five zones (zones Z1 to Z5), and the cooler 312 is provided in one zone (zone Z0) . In addition, temperature measurers 314_0 to 314_5 are provided in the respective zones.

In the present embodiment, the five zones will be referred to as a first zone Z1, a second zone Z2, a third zone Z3, a fourth zone Z4, and a fifth zone Z5 in order from the vicinity of the resin feed port. The 0-th zone Z0 is provided in the resin feed port to which the hopper 335 is connected. The first zone Z1 and the second zone Z2 are provided in the supply zone 330a that receives the resin pellet and transports the resin pellet forward. The third zone Z3 is provided in the compression zone 330b that melts the supplied resin while compressing the supplied resin. The fourth zone Z4 is provided in the metering zone 330c that plasticizes a fixed amount of the molten resin at a time. The fifth zone Z5 is provided in the vicinity of the nozzle 320. In addition, in the present embodiment, an example is described in which temperature control is performed on each of the 0-th zone Z0 to the fifth zone Z5. The example is not limited to a method of performing the temperature control in zone units described in the present embodiment. A section for performing the temperature control is determined depending on a usage mode such as the length of the cylinder 310 and the molding material.

In the 0-th zone Z0, the cooler 312 is disposed on the outer periphery of the cylinder 310.

The cooler 312 is provided behind the plurality of heating units 313_1 to 313_5 (in the vicinity of the resin feed port) . The temperature of the 0-th zone Z0 provided with the cooler 312 is raised by heat transmitted from the first zone Z1. Therefore, the cooler 312 cools the rear portion of the cylinder 310 under the control of the control device 700, and holds the temperature of the rear portion of the cylinder 310 at a temperature which does not cause the surface of the resin pellet to melt so that bridging (lumping) of the resin pellet does not occur in the rear portion of the cylinder 310 or inside the hopper 335. The cooler 312 has a flow path 321 for a refrigerant such as water or air. Then, the control device 700 adjusts the temperature by adjusting a flow rate of the refrigerant flowing through the flow path 321. The temperature of the zone Z0 is measured by the temperature measurers 314_0.

The heating units 313_1 to 313_5 which are individually energized are respectively disposed on the outer periphery of the cylinder 310 in the first zone Z1, the second zone Z2, the third zone Z3, the fourth zone Z4, and the fifth zone Z5. For example, as the heating units 313_1 to 313_5, a band heater that heats the cylinder 310 from the outside is used. The band heater is provided to surround the outer periphery of the cylinder 310. In other words, the heating units 313_1 to 313_5 having planar shapes corresponding to the first zone Z1 to the fifth zone Z5 are attached to the outer periphery of the cylinder 310. Since the heating units 313_1 to 313_5 are energized, the resin pellet can be heated and melted inside the cylinder 310.

The plurality of heating units 313_1 to 313_5 are arrayed along the longitudinal direction of the cylinder 310, and individually heat each of the first zone Z1 to the fifth zone Z5 in which the cylinder 310 is divided in the longitudinal direction. The plurality of heating units 313_1 to 313_5 are feedback-controlled by the control device 700 so that the temperature of each of the zones Z1 to Z5 becomes a set temperature. The temperatures of the respective zones Z1 to Z5 are measured by the temperature measurers 314_1 to 314_5. An operation of the injection molding machine 10 is controlled by the control device 700.

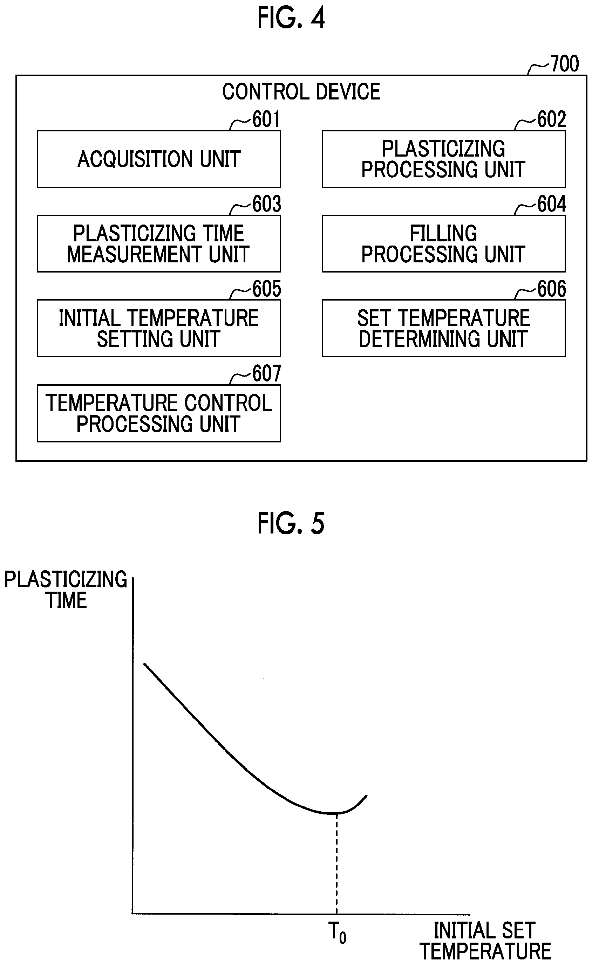

FIG. 4 is a functional block view illustrating components of the control device 700 according to the embodiment. Each functional block illustrated in FIG. 4 is conceptual, and may not necessarily be configured to be physical as illustrated. All or a portion of each functional block can be configured to be functionally or physically distributed and integrated in any desired unit. Each processing function performed in each functional block is realized by a program in which all or any desired partial functions are performed by the CPU 701. Alternatively, each functional block may be realized as hardware using a wired logic. As illustrated in FIG. 4, the control device 700 includes an acquisition unit 601, a plasticizing processing unit 602, a plasticizing time measurement unit 603, a filling processing unit 604, an initial set temperature setting unit 605, and a set temperature determining unit 606, and a temperature control processing unit 607. For example, the acquisition unit 601 acquires information indicating the temperature measured by the temperature measurers 314_0 to S4, and setting values set in advance. The initial set temperature setting unit 605 sets an initial set temperature used to determine a set temperature for the cylinder 310. For example, the plasticizing processing unit 602 controls a plasticizing process of plasticizing the molding material for filling the cavity space 801 in the cylinder 310 at each different initial set temperature. The plasticizing time measurement unit 603 measures a plasticizing time while the plasticizing process is performed by the plasticizing processing unit 602. The filling processing unit 604 controls a filling process. Based on a plurality of the plasticizing times measured for each initial set temperature, the set temperature determining unit 606 determines the set temperature for controlling the heating units 313_1 to 313_5 and the cooler 312 in each zone of the cylinder 310 for filling the cavity space 801 with the molding material. The temperature control processing unit 607 controls the heating units 313_1 to 313_5 and the cooler 312 in accordance with the temperature set by the initial set temperature setting unit 605. Specific description of each configuration will be described later.

Next, an operation of the injection molding machine 10 will be described.

In the plasticizing process, the plasticizing processing unit 602 rotationally drives the plasticizing motor 340 to rotate the screw 330. In this case, a flight (thread) of the screw 330 moves, and the resin pellet (solid molding material) filling the inside of the screw groove of the screw 330 is fed forward. While the resin pellet moves forward inside the cylinder 310, the resin pellet is gradually melted by being heated with heat from the heating units 313_1 to 313_5 via the cylinder 310. Then, the resin pellet is brought into a completely molten state in the tip portion of the cylinder 310. Then, as the liquid molding material (resin) is fed forward of the screw 330 and is accumulated in a front portion of the cylinder 310, the screw 330 is retreated.

The plasticizing motor encoder 341 detects the rotation of the plasticizing motor 340, and transmits a signal indicating a detection result thereof to the control device 700. A screw rotational speed measurer for measuring a rotation speed of the screw 330 is not limited to the plasticizing motor encoder 341, and a general detector can be used.

The acquisition unit 601 acquires a setting value set as the rotation speed of the screw 330.

When the screw 330 is retreated by a predetermined distance and a predetermined amount of the liquid molding material (resin) is accumulated in front of the screw 330, the plasticizing processing unit 602 stops the rotation of the plasticizing motor 340, and stops the rotation of the screw 330.

In the plasticizing process, the injection motor 350 may be driven to apply a preset back pressure to the screw 330 in order to limit sudden retreat of the screw 330. The back pressure applied to the screw 330 is measured by using the load detector 360, for example. The load detector 360 transmits a signal indicating a detection result thereof to the control device 700.

The acquisition unit 601 acquires a position of the screw 330, based on a load detection result from the load detector 360.

In the plasticizing processing unit 602, when the screw 330 is retreated to a plasticizing completion position and a predetermined amount of the molding material is accumulated in front of the screw 330, the plasticizing process is completed.

The position and the rotation speed of the screw 330 in the plasticizing process are collectively set as a series of setting conditions. For example, a plasticizing start position, a rotation speed switching position, and a plasticizing completion position are set. The positions are aligned in this order from the front side toward the rear side, and represent the start point and the end point of the section in which the rotation speed is set. The rotation speed is set for each section. The number of the rotation speed switching positions may be one or more. The rotation speed switching position may not be set. In addition, the back pressure may be set for each section.

The plasticizing time measurement unit 603 measures a plasticizing time while the plasticizing process is performed by the plasticizing processing unit 602.

Next, a reason for measuring the plasticizing time will be described. When the temperature of the cylinder 310 is raised, a time required until the molding material melts can be shortened. Therefore, plasticizing capacity can be improved, and a molten state can be improved.

In particular, the temperature raised in the zones Z0 to Z2 having the section where the solid molding material (resin pellet) exists such as the supply zone 330a. In this manner, melting of the solid molding material is quickened in the section subsequent to the zone Z3 (for example, the section including the compression zone 330b and the metering zone 330c) . In this manner, the plasticizing capacity can be improved. In other words, the amount of the molding material fed to the nozzle 320 side can be increased when the screw 330 rotates.

On the other hand, when the solid molding material melts in the zones Z0 to Z2 including the supply zone 330a from the resin feed port, the plasticizing time may be extended in some cases. The reason is as follows. The softened molding material adheres to the screw 330, thereby degrading efficiency in feeding the molding material to the nozzle 320 side.

In other words, as the set temperature for the heating units 313_1 to 313_2 and the cooler 312 is improved, the melting is quickened. Accordingly, the plasticizing time can be shortened. However, when the temperature is set to a predetermined or higher temperature, the plasticizing time is extended.

Therefore, in the injection molding machine 10 according to the present embodiment, a plurality of the initial set temperatures used to determine the set temperature for the cylinder 310 are set, and the plasticizing process is performed at each of the plurality of initial set temperatures. Then, the set temperature determining unit 606 determines a proper set temperature for the heating units 313_1 to 313_2 and the cooler 312, based on the plurality of plasticizing times measured at each of the initial set temperatures measured by the plasticizing time measurement unit 603.

The present embodiment adopts an example of determining the set temperature of the first zone Z1 corresponding to the supply zone 330a which is the section for supplying the molding material by using the screw 330 when the plasticizing process starts, from a loading port of the resin pellet serving as the molding material. In the present embodiment, an example of determining the set temperature of the first zone Z1 will be described. However, the set temperature can be determined for other zones (for example, the 0-th zone Z0 and the second zone Z2) by using the same method, and thus, description thereof will be omitted.

The initial set temperature setting unit 605 sets an initial set temperature used to determine the set temperature for the cylinder 310. The initial set temperature is set each time the plasticizing time is measured. For example, the initial set temperature setting unit 605 sets the subsequent initial set temperature of the heating unit 313_1 corresponding to the first zone, based on the plasticizing time measured by the plasticizing time measurement unit 603. In the present embodiment, the initial set temperature is set, based on whether or not the current plasticizing time is longer than the previous plasticizing time.

In the present embodiment, a temporary temperature until the initial set temperature setting unit 605 determines an optimum set temperature for molding out of the temperatures set for the cooler 312 and the heating units 313_1 to 313_5 will be referred to as the initial set temperature.

The set temperature determining unit 606 compares the initial set temperatures set for the cooler 312 and the heating units 313_1 to 313_5, and determines the initial set temperature (in other words, the optimum temperature for molding) having a shortest plasticizing time, as the set temperature.

The initial set temperature setting unit 605 of the present embodiment increases the initial setting from the initial value in order to determine the most proper set temperature for molding, and the plasticizing time measurement unit 603 measures the plasticizing time for each initial set temperature. Then, when the initial set temperature having the shortest plasticizing time can be specified, the set temperature determining unit 606 determines the initial set temperature having the shortest plasticizing time, as the set temperature. Thereafter, the temperature control processing unit 607 controls the heating unit 313_1 (in the first zone Z1) so that the temperature reaches the set temperature, and molds the molding product.

FIG. 5 is a view illustrating a correspondence between the plasticizing time and the initial set temperature. As illustrated in FIG. 5, first, as the initial set temperature setting unit 605 increases the initial set temperature, the plasticizing time measured by the plasticizing time measurement unit 603 is shortened. However, when the initial set temperature is higher than a temperature T0, the plasticizing time starts to increase. The reason is considered as follows. Since the molten molding material starts to adhere to the screw 330 or the like due to an increase in the initial set temperature, the molding material does not move forward. Therefore, in the example illustrated in FIG. 5, the set temperature determining unit 606 determines the temperature T0 before the plasticizing time starts to increase, as the set temperature.

The initial set temperature setting unit 605 and the set temperature determining unit 606 determine the set temperature for the 0-th zone Z0 and the second zone Z2 to the fifth zone Z5. The set temperatures of the 0-th zone Z0 and the second zone Z2 are determined by using the same method as that of the first zone Z1. In addition, the third zone Z3 to the fifth zone Z5 may be determined by using the same method as that of the first zone Z1, or may be determined by another method.

The temperature control processing unit 607 controls the cooler 312 disposed in the 0-th zone Z0, and adjusts the temperature to reach the set temperature of the 0-th zone Z0. The cooler 312 of the present embodiment can be controlled to be turned on and off within range of a unit time for cooling. The temperature control processing unit 607 can adjust the temperature of the 0-th zone Z0 to reach the set temperature, based on the temperature measured by the temperature measurer 314_0 and the control of the cooler 312.

The temperature control processing unit 607 controls the heating units 313_1 to 313_5 disposed in the first zone Z1 to the fifth zone Z5, and adjusts the temperature to reach the set temperature set in each of the first zone Z1 to the fifth zone Z5. The heating units 313_1 to 313_5 of the present embodiment can be controlled to be turned on and off within a range of a unit time for heating. For example, when the output is 50%, the temperature control processing unit 607 controls the heating units 313_1 to 313_5 to be turned on during a time of "the unit time for heating / 2" and to be turned off during a time of "the unit time for heating / 2". In addition, when the output is maximum, the temperature control processing unit 607 controls the heating units 313_1 to 313_5 to be continuously turned on. The temperature control processing unit 607 can adjust each temperature of the first zone Z1 to the fifth zone Z5 to reach the set temperature, based on the temperature measured by the temperature measurers 314_1 to 314_5 and the control of the heating units 313_1 to 313_5.

The temperature control processing unit 607 of the present embodiment performs feedback control of the cooler 312 and the heating units 313_1 to 313_5, based on a deviation between measurement temperatures of the temperature measurers 314_0 to 314_5 and the initial set temperature or the set temperature. In this manner, accuracy in reaching the initial set temperature or the set temperature can be improved. The feedback control may be performed by using the same method as the method in the related art such as PID control, and thus, description thereof will be omitted.

In the filling process, the filling processing unit 604 rotationally drives the injection motor 350 to advance the screw 330, and perform control to fill the cavity space 801 inside the mold unit 800 in a mold clamping state with the molten resin (molding material in a molten state). The molding material in the molten state shrinks in the cavity space 801 due to cooling. Therefore, in order to replenish the molding material corresponding to the amount of heat shrinkage, a resin pressure (injection pressure of the molding material) applied to the screw 330 is held at a predetermined pressure in the holding pressure process.

In the filling process, the injection motor 350 is driven to advance the screw 330 at a set movement speed, and the cavity space 801 inside the mold unit 800 is filled with the liquid molding material accumulated in front of the screw 330. The position or the movement speed of the screw 330 is detected by using an injection motor encoder 351, for example. The injection motor encoder 351 detects the rotation of the injection motor 350, and transmits a signal indicating a detection result thereof to the control device 700. When the position of the screw 330 reaches a set position, the filling process is switched to the holding pressure process (so-called V/P switching). The position where the V/P switching is performed will be referred to as a V/P switching position. The set movement speed of the screw 330 may be changed in accordance with the position or a time of the screw 330.

The position and the movement speed of the screw 330 in the filling process are collectively set as a series of setting conditions. For example, a filling start position (also referred to as an "injection start position"), the movement speed switching position, and the V/P switching position are set. The positions are aligned in this order from the rear side toward the front side, and represent the start point and the end point of the section in which the movement speed is set. The movement speed is set for each section. The number of the movement speed switching positions may be one or more. The movement speed switching position may not be set.

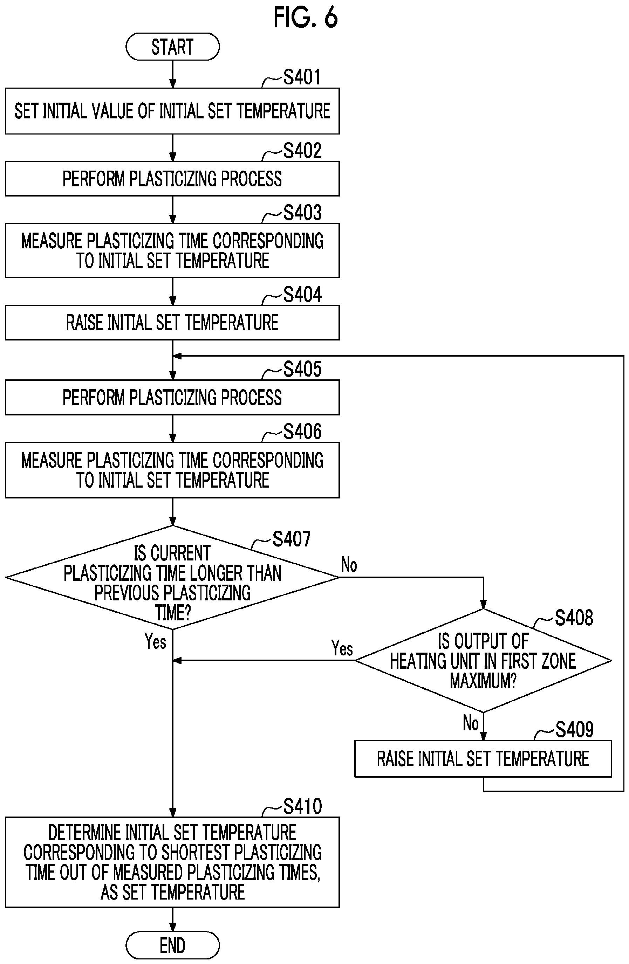

FIG. 6 is a flowchart illustrating a process until the set temperature is determined in the first zone Z1 in the injection molding machine 10 according to the present embodiment. In an example illustrated in FIG. 6, an example of determining the set temperature of the first zone Z1 will be described. However, the same control is performed on other zones (for example, the 0-th zone Z0 and the second zone Z2). When the temperature is adjusted in the 0-th zone Z0, the cooler 312 is used. In the present embodiment, only the initial set temperature is changed, and the processes are performed after other conditions (for example, conditions such as the number of rotation times of the screw 330 and the position of the cylinder 310) are fixed.

First, the initial set temperature setting unit 605 sets an initial value of the initial set temperature of the first zone Z1 (S401). The initial value may be determined depending on a usage mode and a molding material, or may be input by a user.

The plasticizing processing unit 602 rotationally drives the plasticizing motor 340 to rotate the screw 330, thereby performing the plasticizing process (S402).

The plasticizing time measurement unit 603 measures a plasticizing time required for the plasticizing process in a case of the initial set temperature which is currently set (S403).

The initial set temperature setting unit 605 raises the initial set temperature of the first zone Z1, and sets the initial set temperature which is higher than the previous initial set temperature (S404).

The plasticizing processing unit 602 rotationally drives the plasticizing motor 340 to rotate the screw 330, thereby performing the plasticizing process (S405).

The plasticizing time measurement unit 603 measures the plasticizing time required for the plasticizing process in a case of the initial set temperature which is currently set (S406).

The initial set temperature setting unit 605 determines whether or not the plasticizing time measured this time is longer than the previously measured plasticizing time (S407) . When the initial set temperature setting unit 605 determines that the plasticizing time measured this time is not longer than the previously measured plasticizing time (in other words, the plasticizing time is shortened) (S407: No), the initial set temperature setting unit 605 determines whether or not an output of the heating unit 313_1 of the first zone Z1 which is obtained by the temperature control processing unit 607 in the plasticizing process is the maximum (S408). When the initial set temperature setting unit 605 determines that the output of the heating unit 313_1 of the first zone Z1 is the maximum (S408: Yes), the process proceeds to the process in S410.

On the other hand, when the initial set temperature setting unit 605 determines that the output of the heating unit 313_1 in the first zone Z1 is not the maximum (S408: No), the initial set temperature is raised to set the higher initial set temperature than the previous initial set temperature (S409), and the process is performed again from S402. The temperature to be raised may have a preset number of degrees, and is determined depending on a usage mode. In the present embodiment, the plasticizing process in S402 is performed after stabilizing the temperature measured from the first zone Z1 at the set initial set temperature. In the present embodiment, an example will be described in which the plasticizing process is performed after stabilizing the temperature measured from the first zone Z1 at the set initial set temperature. However, the example is not limited to the method, and the plasticizing process may be performed while raising the output of the heating unit 313_1.

On the other hand, when the initial set temperature setting unit 605 determines that the plasticizing time measured this time is longer than the previous plasticizing time (S407: Yes), or when the initial set temperature setting unit 605 determines that the output of the heating unit 313_1 of the first zone Z1 is the maximum (S408: Yes), the set temperature determining unit 606 determines the initial set temperature corresponding to the shortest plasticizing time of the measured plasticizing times, as the set temperature (S410).

The injection molding machine 10 according to the present embodiment includes the above-described configuration. Accordingly, it is possible to control the heating units 313_1 to 313_2 and the cooler 312 at a proper set temperature in the plasticizing process. In this manner, the plasticizing capacity can be improved. Specifically, in the vicinity of a root of the cylinder 310 from a resin feed port into which the resin pellet (solid molding material) is loaded (for example, a section including the supply zone 330a such as the 0-th zone Z0 to the second zone Z2), the heating units 313_1 to 313_2 and the cooler 312 are controlled in accordance with the set temperature set in the above-described process. In this manner, it is possible to achieve both advantageous effects as follows. the plasticizing time required until the resin pellet is brought into a molten state is shortened, and extension of the plasticizing time is suppressed since melting of the resin pellet is suppressed in the vicinity of the root. In this manner, a cycle can be shortened, and productivity can be improved.

Furthermore, since the injection molding machine 10 includes the above-described configuration, it is possible to control the heating units 313_1 to 313_2 and the cooler 312 at a proper set temperature in the plasticizing process. Therefore, a molten state can be improved. Since the molten state is improved, it is possible to improve a molding product defect caused by a poor molten state, for example, such as a crack caused by mixing of the resin which is not melted. A back pressure can be lowered by improving the molten state. Therefore, it is possible to reduce shear heat generation inside the cylinder 310 or to suppress resin deterioration. Furthermore, since the back pressure is lowered, a pressure applied to the molding material is lowered when the molding material is clogged inside the cylinder 310. Therefore, galling can be reduced, and it is possible to suppress a possibility that a life of the screw 330 may be shortened.

Furthermore, in the 0-th zone Z0 to the second zone Z2, the molding material (resin pellet) is easily melted by controlling the heating units 313_1 to 313_2 and the cooler 312 at the proper set temperature in the plasticizing process. Therefore, it is not necessary to raise the set temperature more than necessary in the third zone Z3 to the fifth zone Z5. In other words, the set temperature can be lowered in a section other than the vicinity of the root of the third zone Z3 to the fifth zone Z5. In this manner, the temperature of the molding material (resin) ejected from the nozzle 320 can be lowered. Therefore, a cooling time can be shortened. Therefore, a shortened cycle can be achieved.

Furthermore, the set temperature for each zone of the cylinder 310 can be automatically set. Therefore, a user's burden can be reduced.

### Modification Example of First Embodiment

In the first embodiment, an example has been described in which the initial set temperature corresponding to the shortest plasticizing time is determined as the set temperature. However, the above-described embodiment is not limited to the example in which the initial set temperature corresponding to the shortest plasticizing time is determined as the set temperature. In other words, in some situations, the plasticizing time may be delayed depending on a usage mode. For example, the cooling time may be relatively long in some cases. Therefore, in the modification example, an example will be described in which the set temperature determining unit 606 determines the set temperature, based on the plurality of plasticizing times measured in a measurement process and the cooling time.

Incidentally, the plasticizing process is performed during the cooling process of the previous shot. That is, the plasticizing process of the subsequent shot is performed during the cooling process of the current shot. Therefore, the plasticizing time may not exceed the cooling time.

Therefore, in the control device 700 in the present modification example, the plasticizing processing unit 602 measures the plasticizing time for each initial set temperature in accordance with the process procedure in S401 to S406 illustrated in FIG. 6 of the first embodiment. Then, the set temperature determining unit 606 specifies the plasticizing time shorter than the cooling time from the plurality of measured plasticizing times, and determines the initial set temperature corresponding to the plasticizing time, as the set temperature. When there are the plurality of plasticizing times shorter than the cooling time, any desired plasticizing time may be specified from the plurality of plasticizing times. For example, the set temperature determining unit 606 may specify the longest plasticizing time from the plurality of plasticizing times shorter than the cooling time, and may determine the initial set temperature corresponding to the specified plasticizing time, as the set temperature. In the present modification example, a measurement time required for a measurement process is shorter than the cooling time. Therefore, a shortened cycle can be achieved. In addition, as the set temperature, the set temperature determining unit 606 determines the initial set temperature corresponding to the longest plasticizing time (that is, the lowest initial set temperature) from the initial set temperatures corresponding to the plasticizing time shorter than the cooling time. In this manner, electric power supplied to the heating unit can be reduced. Therefore, energy saving can be achieved.

### Second Embodiment

In the above-described embodiment, a case has been described where the plasticizing time is controlled to be shortest by improving the molten state of the resin. However, in some situations, the plasticizing time may be delayed depending on a usage mode. For example, the cooling time may be relatively long in some cases. Therefore, in the second embodiment, an example will be described where the plasticizing time is adjusted by adjusting the rotation speed of the screw 330 in view of the cooling time.

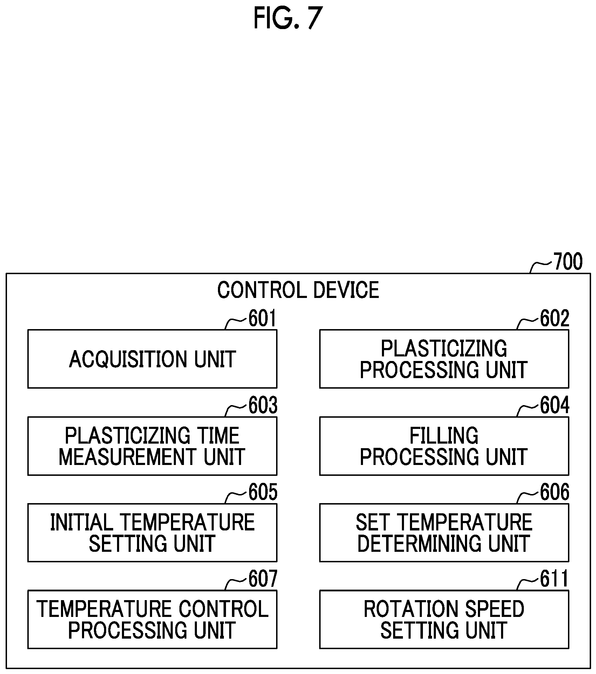

FIG. 7 is a functional block diagram illustrating components of the control device 700 according to the present embodiment. As illustrated in FIG. 7, as in the first embodiment, the control device 700 includes the acquisition unit 601, the plasticizing processing unit 602, the plasticizing time measurement unit 603, the filling processing unit 604, the initial set temperature setting unit 605, the set temperature determining unit 606, and the temperature control processing unit 607, and further includes the rotation speed setting unit 611. In the present embodiment, the same reference numerals will be assigned to the same configurations as those in the first embodiment, and description thereof will be omitted.

Therefore, the rotation speed setting unit 611 according to the present embodiment sets the rotation speed of the screw 330, based on the plurality of plasticizing times measured when the plasticizing process is performed on each of the plurality of different initial set temperatures in the cylinder 310, and the cooling time until the depressurizing process of lowering the mold clamping force starts after the holding pressure process of holding the pressure to press the molding material remaining in the cylinder 310 toward the mold unit 800 is completed. In other words, the present embodiment is an example of adjusting the rotation speed of the screw 330 instead of shortening the plasticizing time, when the set temperature is specified.

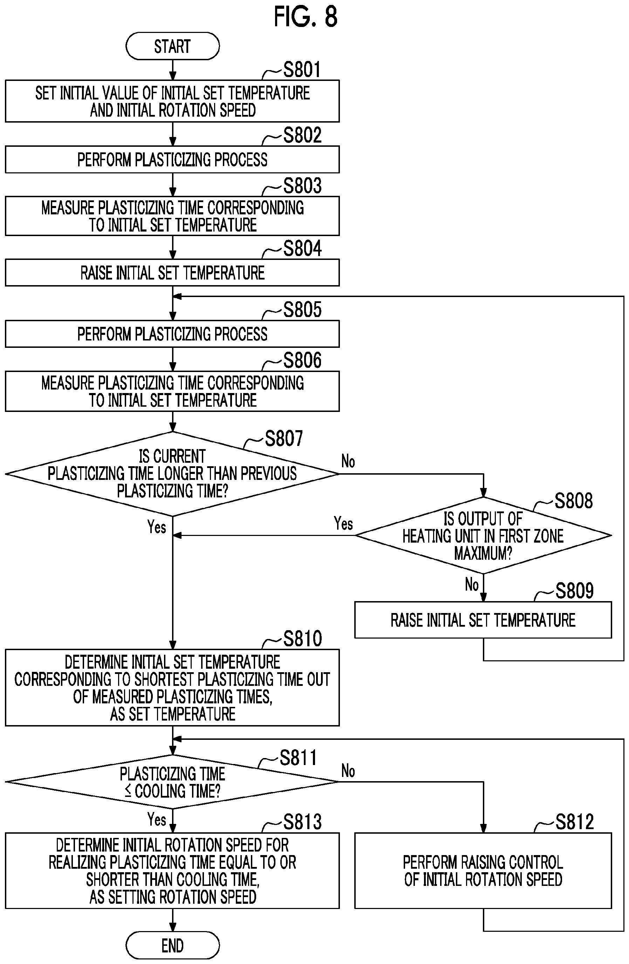

FIG. 8 is a flowchart illustrating a process of setting the set temperature in the first zone Z1 and adjusting the rotation speed in the injection molding machine 10 according to the present embodiment. In an example illustrated in FIG. 8, an example of setting the set temperature of the first zone Z1 will be described. However, the same control may be performed on other zones (for example, the 0-th zone Z0 and the second zone Z2) . When the set temperature is set for the 0-th zone Z0, the cooler 312 is controlled instead of the heating unit 313_1. In the present embodiment, only the set temperature and the rotation speed are changed, and the processes are performed after other conditions (for example, conditions such as the position of the cylinder 310) are fixed.

In the process illustrated in FIG. 8, first, the initial set temperature setting unit 605 sets the initial value of the initial set temperature of the first zone Z1, and the rotation speed setting unit 611 sets the initial value of the initial rotation speed of the screw 330 (S801). The initial value may be determined depending on a usage mode and a molding material, or may be input by a user.

Thereafter, the same processes as those in S402 to S410 are performed in the same manner as in the first embodiment. In this manner, the set temperature determining unit 606 determines the set temperature (S802 to S810) .

Then, the rotation speed setting unit 611 determines whether or not the plasticizing time in the current plasticizing process is equal to or shorter than the cooling time until the depressurizing process starts after the holding pressure process is completed in the mold unit 800 (S811). When it is determined that the plasticizing time in the plasticizing process is longer than the cooling time (S811: No), the rotation speed setting unit 611 performs control to raise the initial rotation speed (S812), and performs the process again from S811.

On the other hand, when the rotation speed setting unit 611 determines that the plasticizing time in the current plasticizing process is equal to or shorter than the cooling time until the depressurizing process starts after the holding pressure process is completed in the mold unit 800 (S811: Yes), the rotation speed setting unit 611 determines the initial rotation speed which is the plasticizing time equal to or shorter than the cooling time, as the set rotation speed (S813) . In the subsequent plasticizing process, the control device 700 controls the screw 330 to rotate at the set rotation speed.

In the injection molding machine 10 according to the present embodiment, the same advantageous effect as that of the first embodiment can be achieved.

### Modification Example

An example has been described as follows. In the vicinity of the root of the cylinder 310 from the resin feed port into which the resin pellet of the cylinder 310 is loaded in the injection molding machine 10 of the above-described embodiment (for example, a section including the supply zone 330a of the 0-th zone Z0 to the second zone Z2), the heating units 313_1 to 313_2 and the cooler 312 are controlled in accordance with the set temperature set in the above-described processes. However, the above-described embodiment is not limited to the method of determining the set temperature only in the vicinity of the root of the cylinder 310 from the resin feed port (for example, the section including the supply zone 330a of the 0-th zone Z0 to the second zone Z2).

For example, the set temperature may be determined by using the method of the above-described embodiment for the zones (for example, the zones Z0 to Z3) in which the resin pellet remains solid inside the cylinder 310 (in which the solid molding material exist) . As the zones in which the resin pellet remains solid inside the cylinder 310 (in which the solid molding material exists) is, for example, it is conceivable to adopt for the 0-th zone Z0 to the third zone Z3 including an end of the compression zone 330b which is a section for the screw 330 to compress the molding material when the plasticizing process starts, from a loading port of the resin pellet. As another example, the set temperature may be determined only in the 0-th zone Z0, the set temperature may be determined only in the first zone Z1, the set temperature may be determined only in the second zone Z2, or the set temperature may be determined only in the third zone Z3.

The molten state of the cylinder 310 can be improved by determining the above-described set temperature, and the set temperature can be automatically determined for each zone of the cylinder 310. Therefore, a user's burden can be reduced.

Furthermore, the set temperature may be determined for the fourth zone Z4 or the fifth zone Z5 by using the method of the above-described embodiment. The set temperature is determined by using the above-described method. In this manner, the molten state of the molding material inside the cylinder 310 or the nozzle 320 can be improved, and the set temperature can be automatically determined for each zone of the cylinder 310. Therefore, a user's burden can be reduced.

Hitherto, the embodiments of the injection molding machine according to the present invention have been described. However, the present invention is not limited to the above-described embodiments. Various modifications, corrections, substitutions, additions, deletions, and combinations can be made within the scope of the appended claims. As a matter of course, all of these also belong to the technical scope of the present invention.

### Brief Description of the Reference Symbols

10: injection molding machine
700: control device
601: acquisition unit
602: plasticizing processing unit
603: plasticizing time measurement unit
604: filling processing unit
605: initial set temperature setting unit
606: set temperature determining unit
607: temperature control processing unit
611: rotation speed setting unit

## Claims

1. An injection molding machine (10) comprising:
an injection unit (300) configured to fill a mold unit (800) with a molding material plasticized inside a cylinder (310); and
a control device (700) configured to control the injection unit (300),
**characterized in that**
the control device (700) includes
an initial set temperature setting unit (605) configured to set a plurality of initial set temperatures used to determine a set temperature for the cylinder (310) by raising the initial set temperature from an initial value of the initial set temperature, the initial value of the initial set temperature being determined depending on a usage mode and the molding material or being input by a user,
a plasticizing processing unit (602) configured to rotationally drive a screw (330) such that a plasticizing process of the molding material is performed, at each of the different initial set temperatures,
a plasticizing time measurement unit (603) configured to measure a plasticizing time during the plasticizing process performed by the plasticizing processing unit (602) for each of the initial set temperatures, and
a set temperature determining unit (606) configured to determine the set temperature for the cylinder (310), based on a plurality of the plasticizing times measured for each of the initial set temperatures by the plasticizing measurement unit (603).

2. The injection molding machine (10) according to claim 1,
wherein the set temperature determining unit (606) is configured to determine, as the set temperature, the initial set temperature obtained when a shortest plasticizing time is measured, out of the plurality of plasticizing times measured by the plasticizing time measurement unit (603).

3. The injection molding machine (10) according to claim 1,
wherein the set temperature determining unit (606) is configured to determine the set temperature for the cylinder (310), based on the plurality of plasticizing times measured by the plasticizing time measurement unit (603) and a cooling time until a depressurizing process starts after a holding pressure process is completed.

4. The injection molding machine (10) according to any one of claims 1 to 3, further comprising:
a rotation speed setting unit (611) configured to set a plurality of rotation speeds of the screw (330) by raising the rotation speed from an initial value of the rotation speed in the plasticizing process, the initial value of the rotation speed being determined depending on the usage mode and the molding material or being input by a user,
wherein the rotation speed setting unit (611) is configured to set the rotation speed, based on the plurality of plasticizing times measured when the plasticizing process is performed at each of the different rotation speeds.

5. The injection molding machine (10) according to claim 4,
wherein the rotation speed setting unit (611) is configured to set the rotation speed, based on the plurality of plasticizing times and a cooling time until a depressurizing process starts after a holding pressure process is completed.

6. The injection molding machine (10) according to any one of claims 1 to 5,
wherein the initial set temperature setting unit (605) is configured to set the initial set temperature for a predetermined zone in a plurality of zones obtained by dividing an outer surface along a longitudinal direction of the cylinder (310), and
the set temperature determining unit (606) is configured to determine a set temperature for the predetermined zone.

7. The injection molding machine (10) according to claim 6,
wherein the initial set temperature setting unit (605) is configured to set the initial set temperature of the predetermined zone in zones corresponding to sections in which the molding material in a solid state exists inside the cylinder (310), and
the set temperature determining unit (606) is configured to determine the set temperature of the predetermined zone.

8. The injection molding machine (10) according to claim 7,
wherein the initial set temperature setting unit (605) is configured to set the initial set temperature for the predetermined zone in zones corresponding to a supply zone (330a) and a compression zone (330b) of the screw (330), and
the set temperature determining unit (606) is configured to determine the set temperature for the predetermined zone.

9. The injection molding machine (10) according to claim 8,
wherein the initial set temperature setting unit (605) is configured to set the initial set temperature for the predetermined zone corresponding to the supply zone (330a) of the screw (330), and
the set temperature determining unit (606) is configured to determine the set temperature for the predetermined zone.

## Patentansprüche

1. Spritzgießmaschine (10), umfassend:
eine Einspritzeinheit (300), die so konfiguriert ist, dass sie eine Formeinheit (800) mit einem innerhalb eines Zylinders (310) plastifizierten Formmaterial befüllt; und
eine Steuervorrichtung (700), die so konfiguriert ist, dass sie die Einspritzeinheit (300) steuert,
**dadurch gekennzeichnet, dass**
die Steuervorrichtung (700) umfasst
eine Anfangseinstelltemperatur-Einstelleinheit (605), die konfiguriert ist, um mehrere Anfangseinstelltemperaturen einzustellen, die verwendet werden, um eine Einstelltemperatur für den Zylinder (310) zu bestimmen, indem die Anfangseinstelltemperatur von einem Anfangswert der Anfangseinstelltemperatur erhöht wird, wobei der Anfangswert der Anfangseinstelltemperatur in Abhängigkeit von einem Verwendungsmodus und dem Formmaterial bestimmt wird oder von einem Benutzer eingegeben wird,
eine Plastifizierungsverarbeitungseinheit (602), die so konfiguriert ist, dass sie eine Schnecke (330) drehend antreibt, so dass ein Plastifizierungsprozess des Formmaterials bei jeder der verschiedenen Anfangseinstelltemperaturen durchgeführt wird,
eine Plastifizierungszeitmesseinheit (603), die so konfiguriert ist, dass sie eine Plastifizierungszeit während des von der Plastifizierungsverarbeitungseinheit (602) durchgeführten Plastifizierungsprozesses für jede der Anfangseinstelltemperaturen misst, und
eine Einstelltemperatur-Bestimmungseinheit (606), die so konfiguriert ist, dass sie die Einstelltemperatur für den Zylinder (310) auf der Grundlage von mehreren der Plastifizierungszeiten bestimmt, die für jede der Anfangseinstelltemperaturen von der Plastifizierungsmesseinheit (603) gemessen wurden.

2. Spritzgießmaschine (10) nach Anspruch 1,
wobei die Einstelltemperatur-Bestimmungseinheit (606) konfiguriert ist, um als die Einstelltemperatur die Anfangseinstelltemperatur zu bestimmen, die erhalten wird, wenn eine kürzeste Plastifizierungszeit aus den mehreren Plastifizierungszeiten, die von der Plastifizierungszeit-Messeinheit (603) gemessen werden, gemessen wird.

3. Spritzgießmaschine (10) nach Anspruch 1,
wobei die Einstelltemperatur-Bestimmungseinheit (606) so konfiguriert ist, dass sie die Einstelltemperatur für den Zylinder (310) auf der Grundlage der mehreren von der Plastifizierungszeit-Messeinheit (603) gemessenen Plastifizierungszeiten und einer Abkühlzeit bis ein Druckentlastungsprozesses startet nachdem ein Druckhalteprozess abgeschlossen ist, bestimmt.

4. Spritzgießmaschine (10) nach einem der Ansprüche 1 bis 3, ferner umfassend:
eine Drehgeschwindigkeits-Einstelleinheit (611), die so konfiguriert ist, dass sie mehrere Drehgeschwindigkeiten der Schnecke (330) einstellt, indem sie die Drehgeschwindigkeit von einem Anfangswert der Drehgeschwindigkeit bei dem Plastifizierungsprozess erhöht, wobei der Anfangswert der Drehgeschwindigkeit in Abhängigkeit von dem Verwendungsmodus und dem Formmaterial bestimmt wird oder von einem Benutzer eingegeben wird,
wobei die Drehgeschwindigkeits-Einstelleinheit (611) so konfiguriert ist, dass sie die Drehgeschwindigkeit auf der Grundlage der mehreren Plastifizierungszeiten einstellt, die gemessen werden, wenn der Plastifizierungsprozess bei jeder der verschiedenen Drehgeschwindigkeiten durchgeführt wird.

5. Spritzgießmaschine (10) nach Anspruch 4,
wobei die Drehzahl-Einstelleinheit (611) so konfiguriert ist, dass sie die Drehzahl auf der Grundlage der mehreren Plastifizierungszeiten und einer Abkühlzeit, bis ein Druckentlastungsprozess startet, nachdem ein Druckhalteprozess abgeschlossen ist, einstellt.

6. Spritzgießmaschine (10) nach einem der Ansprüche 1 bis 5,
wobei die Anfangseinstelltemperatur-Einstelleinheit (605) so konfiguriert ist, dass sie die Anfangseinstelltemperatur für eine vorbestimmte Zone in mehreren Zonen einstellt, die durch Unterteilen einer Außenfläche entlang einer Längsrichtung des Zylinders (310) erhalten werden, und
die Einstelltemperatur-Bestimmungseinheit (606) konfiguriert ist, um eine Einstelltemperatur für die vorbestimmte Zone zu bestimmen.

7. Spritzgießmaschine (10) nach Anspruch 6,
wobei die Anfangseinstelltemperatur-Einstelleinheit (605) so konfiguriert ist, dass sie die Anfangseinstelltemperatur der vorbestimmten Zone in Zonen einstellt, die Abschnitten entsprechen, in denen das Formmaterial in einem festen Zustand innerhalb des Zylinders (310) vorhanden ist, und
die Einstelltemperatur-Bestimmungseinheit (606) konfiguriert ist, um die Einstelltemperatur der vorbestimmten Zone zu bestimmen.

8. Spritzgießmaschine (10) nach Anspruch 7,
wobei die Anfangseinstelltemperatur-Einstelleinheit (605) so konfiguriert ist, dass sie die Anfangseinstelltemperatur für die vorbestimmte Zone in Zonen einstellt, die einer Zufuhrzone (330a) und einer Kompressionszone (330b) der Schnecke (330) entsprechen, und
die Einstelltemperaturbestimmungseinheit (606) so konfiguriert ist, dass sie die Einstelltemperatur für die vorbestimmte Zone bestimmt.

9. Spritzgießmaschine (10) nach Anspruch 8,
wobei die Anfangseinstelltemperatur-Einstelleinheit (605) so konfiguriert ist, dass sie die Anfangseinstelltemperatur für die vorbestimmte Zone entsprechend der Zufuhrzone (330a) der Schnecke (330) einstellt, und
die Einstelltemperaturbestimmungseinheit (606) so konfiguriert ist, dass sie die Einstelltemperatur für die vorbestimmte Zone bestimmt.

## Revendications

1. Une machine de moulage par injection (10) comprenant :
une unité d'injection (300) configurée pour remplir une unité de moule (800) avec un matériau de moulage plastifié dans un cylindre (310) ; et
un dispositif de commande (700) configuré pour contrôler l'unité d'injection (300),
**caractérisée en ce que**
le dispositif de commande (700) comprend
une unité de réglage de température initiale (605) configurée pour régler une pluralité de températures initiales utilisées pour déterminer une température de réglage pour le cylindre (310) en augmentant la température de réglage initiale depuis une valeur initiale de la température de réglage initiale, la valeur initiale de la température de réglage initiale étant déterminée selon un mode d'utilisation et le matériau de moulage ou étant saisie par un utilisateur,
une unité de plastification (602) configurée pour entraîner une vis de façon rotative (330) de sorte qu'un processus de plastification du matériau de moulage soit réalisé, à chacune des différentes températures de réglage initiales,
une unité de mesure de durée de plastification (603) configurée pour mesurer une durée de plastification pendant le processus de plastification réalisé par l'unité de plastification (602) pour chacune des températures de réglage initiales, et
une unité de détermination de température de réglage (606) configurée pour déterminer la température de réglage pour le cylindre (310), sur la base d'une pluralité de durées de plastification mesurées pour chacune des températures de réglage initiales par l'unité de mesure de plastification (603).

2. La machine de moulage par injection (10) selon la revendication 1,
dans laquelle l'unité de détermination de température de réglage (606) est configurée pour déterminer, en guise de température de réglage, la température de réglage initiale obtenue lorsqu'une durée de plastification plus courte est mesurée, parmi la pluralité de durées de plastification mesurées par l'unité de mesure de durée de plastification (603).

3. La machine de moulage par injection (10) selon la revendication 1,
dans laquelle l'unité de détermination de température de réglage (606) est configurée pour déterminer la température de réglage pour le cylindre (310), sur la base de la pluralité de durées de plastification mesurées par l'unité de mesure de durée de plastification (603) et d'une durée de refroidissement jusqu'à ce qu'un processus de dépressurisation démarre après qu'un processus de maintien de pression est terminé.

4. La machine de moulage par injection (10) selon l'une quelconque des revendications 1 à 3, comprenant en outre :
une unité de réglage de vitesse de rotation (611) configurée pour régler une pluralité de vitesses de rotation de la vis (330) en augmentant la vitesse de rotation depuis une valeur initiale de la vitesse de rotation lors du processus de plastification, la valeur initiale de la vitesse de rotation étant déterminée selon le mode d'utilisation et le matériau de moulage ou étant saisie par un utilisateur,
dans laquelle l'unité de réglage de vitesse de rotation (611) est configurée pour régler la vitesse de rotation, sur la base de la pluralité de durées de plastification mesurées lorsque le processus de plastification est réalisé à chacune des différentes vitesses de rotation.

5. La machine de moulage par injection (10) selon la revendication 4,
dans laquelle l'unité de réglage de vitesse de rotation (611) est configurée pour régler la vitesse de rotation, sur la base de la pluralité de durées de plastification et d'une durée de refroidissement jusqu'à ce qu'un processus de dépressurisation démarre après qu'un procédé de maintien de pression est terminé.

6. La machine de moulage par injection (10) selon l'une quelconque des revendications 1 à 5,
dans laquelle l'unité de réglage de température initiale (605) est configurée pour régler la température de réglage initiale pour une zone prédéterminée dans une pluralité de zones obtenues en divisant une surface externe le long d'une direction longitudinale du cylindre (310), et
l'unité de détermination de température de réglage (606) est configurée pour déterminer une température de réglage pour la zone prédéterminée.

7. La machine de moulage par injection (10) selon la revendication 6,
dans laquelle l'unité de réglage de température initiale (605) est configurée pour régler la température de réglage initiale de la zone prédéterminée dans les zones correspondant aux sections dans lesquelles le matériau de moulage dans un état solide est présent dans le cylindre (310), et
l'unité de détermination de température de réglage (606) est configurée pour déterminer la température de réglage de la zone prédéterminée.

8. La machine de moulage par injection (10) selon la revendication 7,
dans laquelle l'unité de réglage de température initiale (605) est configurée pour régler la température de réglage initiale pour la zone prédéterminée dans les zones correspondant à une zone d'alimentation (330a) et une zone de compression (330b) de la vis (330), et
l'unité de détermination de température de réglage (606) est configurée pour déterminer la température de réglage pour la zone prédéterminée.

9. La machine de moulage par injection (10) selon la revendication 8,
dans laquelle l'unité de réglage de température initiale (605) est configurée pour régler la température de réglage initiale pour la zone prédéterminée correspondant à la zone d'alimentation (330a) de la vis (330), et
l'unité de détermination de température de réglage (606) est configurée pour déterminer la température de réglage pour la zone prédéterminée.
